# EUROPEAN PATENT SPECIFICATION

(11) **EP 4 290 921 B1**
(45) Date of publication and mention of the grant of the patent: **06.05.2026**
(21) Application number: 21941293.9
(22) Date of filing: 11.05.2021
(51) Int. Cl.: H04W 74/0833, H04W 8/24, H04W 72/21, H04W 74/0836

(54) **INFORMATION INDICATION METHOD, TERMINAL DEVICE, NETWORK DEVICE, CHIP AND STORAGE MEDIUM**
INFORMATIONSANZEIGEVERFAHREN, ENDGERÄTEVORRICHTUNG, NETZWERKVORRICHTUNG, CHIP UND SPEICHERMEDIUM
PROCÉDÉ D'INDICATION D'INFORMATIONS, DISPOSITIF TERMINAL, DISPOSITIF DE RÉSEAU, PUCE ET SUPPORT DE STOCKAGE

(43) Date of publication of application: 13.12.2023
(73) Proprietor: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Novagraaf Technologies
(86) International application number: PCT/CN2021/093173
(87) International publication number: WO 2022/236718

(56) References cited:
- CN-A- 111 567 126
- US-A1- 2021 058 971
- US-A1- 2021 058 971
- HUAWEI ET AL: "Other aspects for reduced capability devices", vol. RAN WG1, no. E-meeting; 20200525 - 20200605, 16 May 2020 (2020-05-16), XP051886328, Retrieved from the Internet <URL:https://ftp.3gpp.org/tsg_ran/WG1_RL1/TSGR1_101-e/Docs/R1-2004612.zip R1-2004612.docx> [retrieved on 20200516]
- SAMSUNG: "Considerations on access barring and UE capability", vol. RAN WG1, no. e-Meeting; 20200525 - 20200605, 15 May 2020 (2020-05-15), XP052345294, Retrieved from the Internet <URL:https://ftp.3gpp.org/tsg_ran/WG1_RL1/TSGR1_101-e/Docs/R1-2003913.zip R1-2003913 Considerations on access barring and UE capability.doc> [retrieved on 20200515]
- ERICSSON: "UE identification and access restriction for RedCap", 3GPP DRAFT; R1-2007533, vol. RAN WG1, 17 October 2020 (2020-10-17), pages 1 - 4, XP051939783
- ANONYMOUS: "3GPP RAN1 Chair’s Notes", 3GPP TSG RAN WG1 MEETING #104B-E; E-MEETING, APRIL 12TH – 20TH, 2021, 20 April 2021 (2021-04-20), pages 1 - 56, XP009541271
- MODERATOR (INTEL CORPORATION): "Moderator summary #4 on RedCap - Others", 3GPP DRAFT; R1-2009735, vol. RAN WG1, 13 November 2020 (2020-11-13), pages 1 - 72, XP051954379

## Description

### TECHNICAL FIELD

The disclosure relates to the field of communication, and particularly to a method for information indication, a terminal device, a network device, a chip, a computer readable storage medium, a computer program product, a computer program and a communication system.

### BACKGROUND

A NR system supports Enhanced Mobile Broadband (eMBB) services with requirements of high speed, high spectral efficiency and large bandwidth, and also supports other service types, such as a sensor network, a video surveillance, a wearable device and so on, with different requirements in terms of the speed, the bandwidth, the power consumption and the cost. The capability of terminals supporting these services is reduced compared with those supporting the eMBB, such as a decrease of supported bandwidths, a relaxed processing time, a reduced number of antennas, a relaxed maximum modulation order, etc. Such terminals can be referred to as Reduced Capability (RedCap) terminals.

In order to facilitate a network device to set a transmission mode of a downlink channel according to different terminal types, in the related technologies, a RedCap terminal is allowed to report its type or capability during a random access procedure, so that the network device can identify the access of the RedCap terminal earlier, and perform optimization based on the transmission capability of the RedCap terminal to improve the transmission efficiency. Such a reporting mode can be referred to as an earlier indication. However, when the terminal provides the earlier indication during the random access procedure, a set of uplink resources in the random access procedure will be divided, causing a decrease in the utilization rate of the uplink resources. Therefore, it is necessary to consider how to provide the earlier indication flexibly.

US2021/058971A1 provides a method for PRACH preamble transmissions or receptions, the method includes receiving a PDSCH that provides a SIB, the SIB includes an indication for (i) a first TCI state that provides a first set of QCL properties and (ii) for a second TCI state that provides a second set of QCL properties; and transmitting a first PRACH according to the first TCI state and a second PRACH according to the second TCI state.

HUAWEI ET AL: "Other aspects for reduced capability devices", 3GPP DRAFT; R1-2004612, 3RD GENERATION PARTNERSHIP PROJECT (3GPP), MOBILE COMPETENCE CENTRE ; 650, ROUTE DES LUCIOLES · F-06921 SOPHIA-ANTIPOLIS CEDEX · FRANCE vol. RAN WG1, no. E-meeting; 20200525-20200605 16 May 2020 (2020-05-16), XP051886328, discusses about the characteristics of the REDCAP (reduced capability) UEs and the identification and access restriction of reduced capabilities devices.

### SUMMARY

In view of this, embodiments of the present disclosure provide a method for information indication, a terminal device, a network device, a chip, a computer readable storage medium, a computer program product, a computer program and a communication system, which can be used to provide the earlier indication flexibly.

The present invention is defined in the independent claims, and preferred embodiments are defined in the dependent claims.

According to the technical solution of the embodiments of the present disclosure, a terminal device can determine whether to provide an earlier indication that the terminal device is a RedCap terminal in first uplink information of a random access procedure according to the first indication information transmitted by a network device. Therefore, by configuring the first indication information, the earlier indication and the uplink information used for the earlier indication can be flexibly configured, so that it is convenient for the network device to perform optimization according to the terminal type, furthermore, it can avoid a decrease of the utilization rate caused by an excessive division to uplink resources during the random access procedure.

### BRIEF DESCRIPTION OF THE DRAWINGS

FIG. 1 is a schematic diagram of architecture of a communication system according to an embodiment of the present disclosure.
FIG. 2 is a schematic diagram of a 4-step random access procedure.
FIG. 3 is a schematic diagram of a 2-step random access procedure.
FIG. 4 is a schematic diagram of a relative relationship between a Physical Uplink Shared Channel (PUSCH) Occasion (PO) and an associated Random Access Channel (RACH) Occasion (RO).
FIG. 5 is a schematic flowchart of a method for information indication according to an embodiment of the present disclosure.
FIG. 6 is a schematic flowchart of a method for information indication according to another embodiment of the present disclosure.
FIG. 7 is a schematic structural block diagram of a terminal device according to an embodiment of the present disclosure.
FIG. 8 is a schematic structural block diagram of a network device according to an embodiment of the present disclosure.
FIG. 9 is a schematic block diagram of a communication device according to an embodiment of the present disclosure.
FIG. 10 is a schematic block diagram of a chip according to an embodiment of the present disclosure.
FIG. 11 is a schematic block diagram of a communication system according to an embodiment of the present disclosure.

### DETAILED DESCRIPTION

The technical solution in the embodiments of the present disclosure will be described below in combination with the drawings in the embodiments of the present disclosure.

The technical solution in the embodiments of the present disclosure can be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, a LTE-based access to unlicensed spectrum (LTE-U) system, a NR-based access to unlicensed spectrum (NR-U) system, a Non-Terrestrial Network (NTN), a Universal Mobile Telecommunications System (UMTS), a Wireless Local Area Network (WLAN), a Wireless Fidelity (WiFi), a 5th Generation (5G) system or other communication systems.

In general, traditional communication systems support a limited number of connections and are easy to implement. However, with the development of the communication technology, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) etc. The embodiments of the present disclosure can also be applied to these communication systems.

Alternatively, the communication system in the embodiments of the present disclosure can be applied to Carrier Aggregation (CA) scenarios, Dual Connectivity (DC) scenarios, or Standalone (SA) network deployment scenarios.

Each embodiment is described in connection with a network device and a terminal device in the embodiments of the present disclosure. The terminal device may also be referred to as a User Equipment (UE), an access terminal, a user unit, a user station, a mobile station, a remote station, a remote terminal, a mobile device, a user terminal, a terminal, a wireless communication device, a user agent or a user apparatus, etc.

The terminal device may be a station (ST) in the WLAN, a cellular telephone, a cordless telephone, a Session Initiation Protocol (SIP) telephone, a Wireless Local Loop (WLL) station, a Personal Digital Processing (PDA) device, a handheld device having a wireless communication function, a computing device or other processing device connected to a wireless modem, an on-board equipment, a wearable device, a next generation communication system, such as a terminal device in an NR network, or a terminal device in a future evolved Public Land Mobile Network (PLMN), etc.

**In** the embodiments of the present disclosure, the terminal device may be arranged on land including indoor or outdoor areas, handheld, wearable or on-board; the terminal device may also be arranged on the water (such as on a ship); the terminal device may further be arranged on the air (such as on an airplane, a balloon, or a satellite).

**In** the embodiments of the present disclosure, the terminal device may be a mobile phone, a tablet computer (or Pad), a computer with wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal equipment in a smart home, etc.

As an example rather than a limitation, in the embodiments of the present disclosure, the terminal device may also be a wearable device. The wearable device can also be referred to as wearable intelligent device, which are a general name of the wearable devices developed by applying a wearable technology to intelligently design the daily wear, such as glasses, gloves, watches, clothing and shoes. The wearable device is a portable device that is worn directly on the body or integrated into the user's clothes or accessories. The wearable device is not only a kind of hardware device, but also a kind of device realizing powerful functions through software support, data interaction and cloud interaction. Generalized wearable smart devices include: a device with full functions and large size (such as smart watches or smart glasses), which can implement complete or partial functions without relying on a smart phone; and a device only focusing on a certain application function (such as various smart bracelets and smart jewelries for monitoring physical signs), which need to be used in conjunction with other devices (such as smart phone).

In the embodiments of the present disclosure, the network device may be a device for communicating with a mobile device, and the network device may be an Access Point (AP) in a WLAN, a Base Transceiver Station (BTS) in a GSM or CDMA, a NodeB (NB) in a WCDMA, an Evolved Node B (eNB or eNodeB), a relay station or an AP, an on-board equipment or a wearable device, a gNB in an NR network or a network device in a future evolved PLMN network, etc.

As an example rather than a limitation, in the embodiments of the present disclosure, the network device may have mobility, for example, the network device may be a mobile device. Optionally, the network device can be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, or the like. Optionally, the network device can also be a base station arranged on land, water and the like.

In the embodiments of the present disclosure, the network device can provide services for a cell, and the terminal device communicates with the network device through the transmission resources (such as frequency domain resources, also called spectrum resources) used by the cell. The cell may be a cell corresponding to the network device (e.g., base station), and the cell may belong to a macro base station or a base station corresponding to a small cell. The small cell may include a metro cell, a micro cell, a pico cell, a femto cell, etc. These small cells have characteristics of small coverage and low transmission power, which are suitable for providing services of high-speed data transmission.

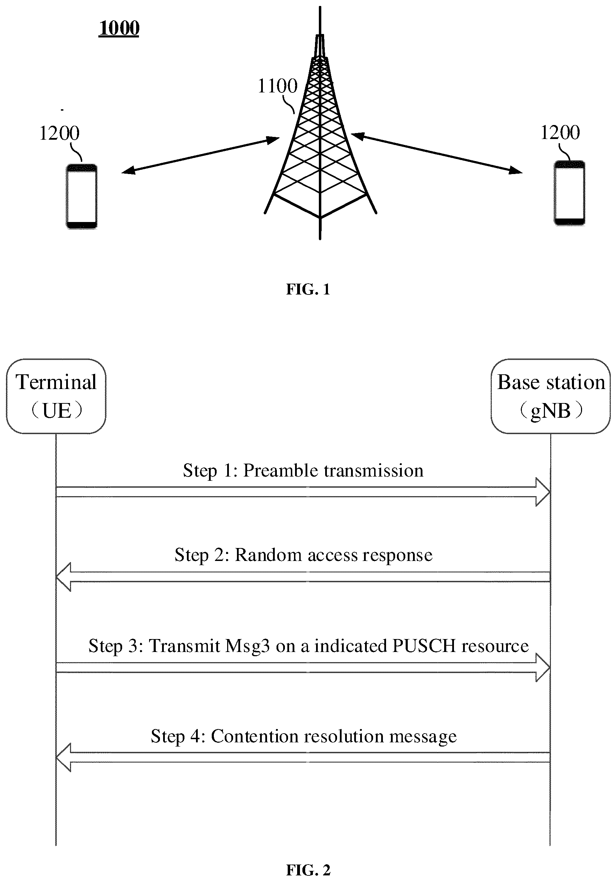

FIG. 1 schematically illustrates a wireless communication system 1000. The wireless communication system 1000 includes one network device 1100 and two terminal devices 1200. Optionally, the wireless communication system 100 may include a plurality of network devices 1100, and any other number of terminal devices 1200 may be included within the coverage area of each network device 1100, which is not limited by the embodiments of the present disclosure.

Optionally, the wireless communication system 100 may also include other network entities, such as a Mobility Management Entity (MME), an Access and Mobility Management Function (AMF) and the like, embodiments of the present disclosure are not limited thereto. The network device may also include an access network device and a core network device. That is, the wireless communication system also includes a plurality of core networks for communicating with the access network device. The access network device may be an evolutionary node B (eNB or e-NodeB for short), a macro base station, a micro base station (also referred to as a "small base station"), a pico base station, an Access Point (AP), a Transmission Point (TP) or a new generation Node B (gNodeB) in a Long-Term Evolution (LTE) system, a Next Radio (NR) system or an authorized auxiliary access long-term evolution (LAA-LTE) system.

It should be understood that a device having a communication function in a network/system in the embodiments of the present disclosure may be referred to as a communication device. The communication system shown in FIG. 1 is taken as an example, the communication device may include a network device and a terminal device having a communication function, the network device and the terminal device may be specific devices in the embodiments of the present disclosure and will not be described herein. The communication device may also include other devices in the communication system, such as a network controller, a mobility management entity and other network entities, which are not limited in the embodiments of the present disclosure.

It should be understood that terms "system" and "network" in the present disclosure may usually be exchanged. In the present disclosure, the term "and/or" is only used for describing an association relationship of associated objects and represents that three relationships may exist. For example, A and/or B may represent three conditions: independent existence of A, existence of both A and B, and independent existence of B. Character "/" in the present disclosure usually represents that previous and next associated objects form an "or" relationship.

It should be understood that the "indication" mentioned in the embodiments of the present disclosure may be a direct indication, may be an indirect indication, or may represent that there is an association relationship. For example, A indicates B, may represent that A directly indicates B, e.g., B can be obtained through A, may also represent that A indirectly indicates B, e.g., A indicates C, and B can be obtained through C, may also represent that there is an association relationship between A and B.

In the description of the embodiments of the present disclosure, the term "corresponding to" may represent that there is a direct correspondence or an indirect correspondence relationship between two elements, may also represent that there is an association relationship between the two elements, may also be a relationship in which one element indicates or is indicated by the other element, or one element configures or is configured by the other element, etc.

In order to facilitate understanding of the technical solution of the embodiments of the present disclosure, the related technologies of the embodiments of the present disclosure are described as follow, and the following related technologies as an optional scheme can be arbitrarily combined with the technical solution of the embodiments of the present disclosure, all of which belong to the protection scope of the embodiments of the present disclosure.

### (1) RACH process:

As shown in FIG. 2, in a 5G system, a 4-step process similar to a LTE is adopted during the random access procedure.

In step 1: A UE transmits a Physical Random Access Channel (PRACH) to a base station, and the PRACH includes a random access preamble (i.e., a message 1 (MSG1)).

In step 2: After the base station detects the access preamble transmitted by the UE, the base station transmits a Random Access Response (RAR), i.e., a Message 2 (Msg2), to the UE to inform the UE of PUSCH resources available for transmitting a Message 3 (Msg3), and allocates a Radio Network Temporary Identifier (RNTI) for the UE, and provides a time advance command for the UE.

In step 3: After receiving the RAR, the UE transmits the Msg3 on the PUSCH resource indicated by the random access response message carrying UE-specific temporary identification information.

In step 4: The base station transmits a Message 4 (Msg4) including a contention resolution message to the UE, and allocates uplink transmission resources for the UE. When receiving the Msg4 transmitted by the base station, the UE will detects whether the UE-specific temporary identification transmitted by the UE in the Msg3 is included in the contention resolution message transmitted by the base station. If being included, it indicates that the random access procedure of the UE is successful. Otherwise, it is considered that the random process fails, and the UE needs to initiate the random access procedure again from the step 1.

### (2) 2-step RACH process

The delay overhead of the 4-step RACH process is larger, which is not suitable for low delay and high reliability scenarios in 5G. In standardization processes of the NR, considering the characteristics of related services with low delay and high reliability, a 2-step RACH process, namely a Type-2 random access procedure, is introduced in R16, which can reduce access delay compared with the 4-step RACH process. Correspondingly, the 4-step RACH process is referred to as a Type-1 random access procedure.

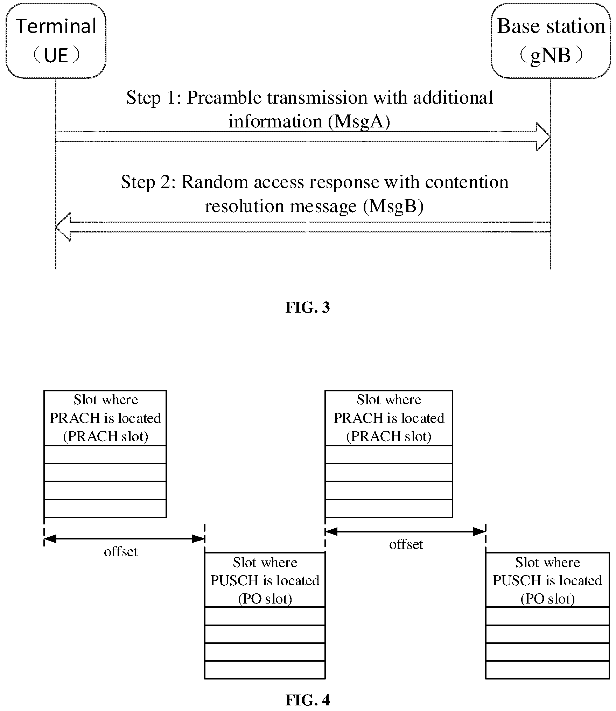

The 2-step RACH process is shown in FIG. 3.

In the 2-step RACH process, simply speaking, it is equivalent to merging the step 1 and the step 3 of the 4-step RACH process into the step 1 of the 2-step RACH process: a UE transmits a Message A (MsgA); and merging the step 2 and the step 4 of the 4-step RACH process into the step 2 of the 2-step RACH process: a base station transmits a Message B (MsgB) for response.

In the step 1 of the 2-step RACH, the MsgA includes a preamble and a PUSCH sections. In the step 2 of the 2-step RACH, the MsgB includes a Physical Downlink Control Channel (PDCCH) and a Physical Downlink Shared Channel (PDSCH).

For MsgA, UE needs to transmit the preamble and the PUSCH, in which the RO where the preamble is located is the same as that of the 4-step RACH process, and its RO can be shared with the RO of the 4-step RACH or configured separately through a network configuration.

Time-frequency resources where the PUSCH is located are referred to as a PO. One PO may contain a plurality of PUSCH Resource Units (PRU), one PRU contains a PUSCH resource and a Demodulation Reference Signal (DMRS), and the DMRS contains a DMRS port and a DMRS sequence (applicable to Orthogonal Frequency Division Multiple Access (OFDMA)). The PO is also configured through the network, and its period is the same as and related with that of the RO.

As shown in FIG. 4, a relative relationship in the time-frequency position between a slot where a physical uplink shared channel is located (PO slot) and an associated RO (such as a slot where a physical random access channel is located (PRACH slot)) is configured through a network, and the relative relationship includes an offset between the PO slot and the PRACH slot.

### (3) RedCap terminal

The NR system is mainly designed to support an eMBB service, whose main technology is to meet the requirements of high speed, high spectrum efficiency and large bandwidth. In fact, besides the eMBB, there are many different service types, such as a sensor network, a video surveillance, wearable, etc., and they have different requirements from the eMBB service in terms of the speed, the bandwidth, the power consumption and the cost.

The capability of terminals supporting these services is reduced compared with those supporting the eMBB, such as a decrease of supported bandwidths, a relaxed processing time, a reduced number of antennas, a relaxed maximum modulation order, etc. The NR system needs to be optimized for these services and the corresponding RedCap terminals. Such terminals can be referred to as RedCap terminals for short.

In the LTE technology, similar systems, such as a MTC and a Narrow Band Internet of Things (NB-IoT), have been designed to support terminals with large number of connections, low power consumption and low cost. In the NR system, it is desirable to introduce the similar technologies for using the NR technology to better support other service types besides the eMBB service. For such low-complexity and low-cost terminals, one optimization that needs to be performed is coverage enhancement, which is used to improve the downlink and uplink coverage of such terminals.

### (4) Identification of a RedCap UE by a network

For a UE performing an initial access, after receiving a system message, a random access procedure is initiated to establish a Radio Resource Control (RRC) connection to a network. During the process, the network needs to identify the type of the UE and obtain capability information related to the UE. The UE may indicate its type to the network device through the following manners.

The indication is provided during the transmission of an Msg1, for example, through an initial uplink Bandwidth Part (BWP) where the Msg1 is transmitted, through independent PRACH resources, or dividing an independent set of PRACH preambles.

The indication is provided during the transmission of the Msg3, for example, in a load of a PUSCH carrying the Msg3.

The indication is provided after transmitting an Msg4, for example, in a Message 5 (Msg5) or reported as the capability of the UE.

The indication is provided during the transmission of the MsgA in a 2-step RACH process.

For a RedCap terminal, a network device cannot be informed of the terminal type or capability of the RedCap terminal in an initial access stage. Compared with a non-RedCap terminal, a reception performance of the RedCap terminal for the downlink channel is degraded due to the decrease of the number of receiving antennas. During the random access procedure, a network transmits an Msg2 and an Msg4 to a terminal through a common channel. Because the type of the terminal is unknown, a conservative manner is that the network sets a transmission mode, such as a scheduling resource size, a modulation and coding scheme, etc., of the downlink channel according to the number of the receiving antennas of the RedCap terminal. Such a manner will reduce the downlink spectrum efficiency.

The method for solving the problem includes the following operation. The RedCap terminal reports its type or capability during the random access procedure, so that it is convenient for the network to adopt a corresponding transmission mode for the downlink channel. Generally speaking, the earlier the network identifies the access of RedCap UE, the earlier the optimization can be performed according to the transmission of RedCap UE and the transmission efficiency can be improved. Such a reporting manner or indication manner is hereinafter referred to as earlier indication. For example, through an indication of the Msg1, the network can perform an optimization according to the RedCap UE during the transmission of the Msg2. However, the operation of providing the indication during the transmission of the Msg1 includes distinguishing the RedCap terminal from the non-RedCap terminal according to the difference of preambles, initial uplink BWPs and PRACH resources, which will divide the set of the PRACH resources, thereby causing a decrease of a utilization rate of the PRACH resources and a decrease of a user capacity supported by the PRACH. When multiple types or capabilities of the RedCap UE need to be indicated, further division to the PRACH resources will further aggravate the problem. Based on this, it can be considered that the network is allowed to configure whether to provide an earlier indication about the type or capability of the RedCap terminal during the random access procedure through a system message, and it should be considered that how to perform the configuration.

The solution provided by the embodiments of the present disclosure is mainly used to solve at least one of the above problems.

In order to enable a more detailed understanding to the characteristics and technical contents of the embodiments of the disclosure, the implementation of the embodiments of the disclosure will be described in detail below in conjunction with the drawings, which are provided for illustration only and are not intended to limit the embodiments of the disclosure.

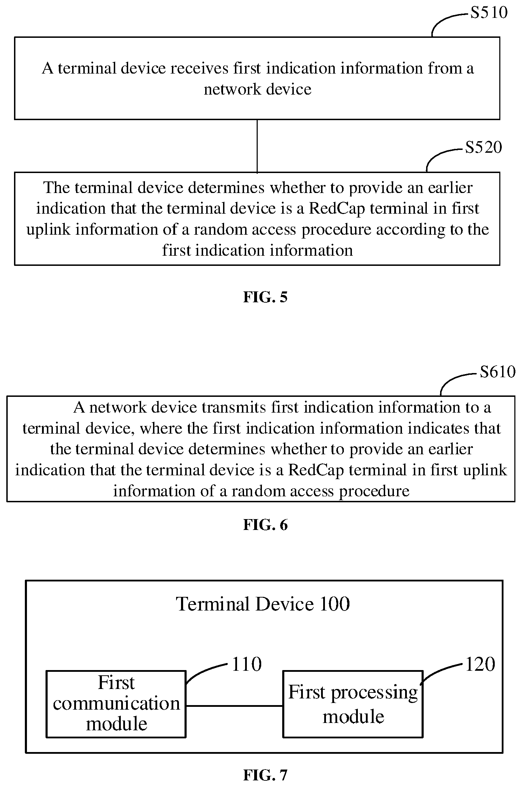

FIG. 5 is a schematic flowchart of a method for information indication according to an embodiment of the present disclosure. The method can optionally be applied to the system shown in FIG. 1, but is not limited thereto. The method includes at least part of the following contents.

At S510, a terminal device receives first indication information from a network device;

At S520, the terminal device determines whether to provide an earlier indication that the terminal device is a RedCap terminal in first uplink information of a random access procedure according to the first indication information.

Corresponding to the above method, the embodiments of the present disclosure also provide a method for information indication, referring specifically to FIG. 6, the method includes the following operations.

At S610, a network device transmits first indication information to a terminal device.

The first indication information indicates that the terminal device determines whether to provide an earlier indication that the terminal device is a RedCap terminal in first uplink information of a random access procedure.

Optionally, the first indication information can be carried by a system message.

Optionally, the earlier indication that the terminal device is the RedCap terminal includes an earlier indication about a type and/or a capability of the RedCap terminal.

Optionally, the first uplink information includes a first PRACH and/or a first PUSCH.

Optionally, the first PRACH includes a PRACH of the 4-step random access procedure.

That is to say, for the 4-step random access procedure, the terminal device can optionally determine whether to provide the earlier indication in the PRACH, i.e., in the Msg1, according to the first indication information.

Optionally, the first PRACH includes a PRACH in the MsgA of the 2-step random access procedure.

That is to say, for the 2-step random access procedure, the terminal device can optionally determine whether to provide the earlier indication in the PRACH of the MsgA according to the first indication information.

Optionally, the first PUSCH includes a PUSCH in the Msg3 of the 4-step random access procedure.

That is to say, for the 4-step random access procedure, the terminal device can optionally determine whether to provide the earlier indication in the PUSCH of the Msg3 according to the first indication information.

Optionally, the first PUSCH includes a PUSCH of the MsgA of the 2-step random access procedure.

That is to say, for the 2-step random access procedure, the terminal device can optionally determine whether to provide the earlier indication in the PUSCH of the MsgA according to the first indication information.

In a practical application, the terminal device can also determine whether to jointly provide the earlier indication in the first PRACH and the first PUSCH during the random access procedure according to the first indication information.

In the embodiments of the present disclosure, the first indication information may be used for different purposes in different scenarios. Several specific examples are provided below.

Example 1: The first indication information indicates whether to provide an earlier indication that the terminal device is a RedCap terminal during a random access procedure.

For example, in a case that uplink information for the earlier indication has been configured as the above mentioned first uplink information in the system, the terminal device determines whether to provide the earlier indication according to the first indication information.

In an implementation, the first indication information explicitly indicates whether to provide the earlier indication that the terminal device is the RedCap terminal during the random access procedure. For example, the first indication information is added to a system message to indicate that the terminal device provides the earlier indication (with a bit "1") or not to provide the earlier indication (with a bit "0").

In another implementation, the first indication information implicitly indicates whether to provide the earlier indication that the terminal device is the RedCap terminal during the random access procedure.

The first indication information is used to configure a first uplink resource for the terminal device, and the first uplink resource is used to transmit uplink information during the random access procedure.

The operation that the terminal device determines whether to provide the earlier indication that the terminal device is the RedCap terminal in the first uplink information of the random access procedure according to the first indication information includes the following operation.

The terminal device determines to provide the earlier indication that the terminal device is the RedCap terminal in the first uplink information of the random access procedure in a case that the first uplink resource includes an uplink resource for the RedCap terminal.

That is to say, in a case that the first uplink resource includes the uplink resource for the RedCap terminal, the first indication information further indicates that the terminal device to determine to provide the earlier indication that the terminal device is the RedCap terminal in the first uplink information.

Optionally, the terminal device determines not to provide the earlier indication that the terminal device is the RedCap terminal in the first uplink information of the random access procedure in a case that the first uplink resource does not include an uplink resource for the RedCap terminal.

For example, the network device configures resources for transmitting the PRACH and/or the PUSCH for a RedCap terminal through the first indication information, including resources used by a non-RedCap terminal and, optionally, resources used by the RedCap terminal. When the network configures the resources used by the RedCap terminal, the terminal device is implicitly configured to provide an earlier indication that the terminal device is the RedCap terminal during a random access procedure, for example, provide the earlier indication in the first uplink information specified in advance. Exemplarily, the network device can identify the terminal device as a RedCap terminal, when a terminal device transmits uplink information on a resource configured by the first indication information.

Example 2: The first indication information is used to configure uplink information for providing the earlier indication that the terminal device is the RedCap terminal.

For example, in a case that the system has configured or defaulted that the terminal device can provide the earlier indication, the first indication information is used to configure uplink information for providing the earlier indication, and based on this, the terminal device determines whether to provide the earlier indication in the first uplink information or other uplink information based on the first indication information.

As another example, in a case that the network device configures the terminal device to provide the earlier indication through second indication information, the terminal device determines to provide the earlier indication in the first uplink information or other uplink information based on the first indication information. Specifically, the above mentioned operation S520, i.e., the terminal device determines whether to provide the earlier indication that the terminal device is the RedCap terminal in the first uplink information of the random access procedure according to the first indication information, includes the following operation.

In a case that it is determined to provide the earlier indication that the terminal device is the RedCap terminal during the random access procedure according to received second indication information, the terminal device determines whether to provide the earlier indication that the terminal device is the RedCap terminal in the first uplink information of the random access procedure according to the first indication information.

Correspondingly, the above mentioned operation S610, i.e., the network device transmits the first indication information to the terminal device, includes the following operations.

The network device transmits the first indication information to the terminal device in a case that second indication information is transmitted to the terminal device.

The second indication information indicates that the terminal device determines to provide the earlier indication that the terminal device is the RedCap terminal during the random access procedure.

That is to say, the network device indicates that the terminal device may provide the earlier indication through the second indication information, and on this basis, the terminal device determines whether to provide the earlier indication in the first uplink information or other uplink information according to the first indication information.

Exemplarily, the second indication information can be carried by a system message.

Exemplarily, the second indication information can explicitly indicate that the terminal device can provide the earlier indication. For example, specific information is set in the system message to indicate whether the terminal device can provide the earlier indication. One example is that the terminal device can provide the earlier indication when the specific information is the second indication information, such as a bit "1"; the terminal device does not provide the earlier indication when the specific information is other information, such as a bit "0". Another example is that the specific information is the second indication information, and the terminal device can provide the earlier indication when the second indication information is received, the terminal device does not provide the earlier indication when the second indication information is not received.

Optionally, the first indication information can explicitly configure uplink information for the earlier indication. Specifically, the first indication information indicates third uplink information, and the third uplink information is used to provide the earlier indication that the terminal device is the RedCap terminal.

The operation that the terminal device determines whether to provide the earlier indication that the terminal device is the RedCap terminal in the first uplink information of the random access procedure according to the first indication information includes the following operation.

The terminal device determines to provide the earlier indication that the terminal device is the RedCap terminal in the first uplink information in a case that the third uplink information includes the first uplink information.

In other words, in a case that the third uplink information includes the first uplink information, the first indication information further indicates that the terminal device determines to provide the earlier indication that the terminal device is the RedCap terminal in the first uplink information.

Optionally, in the case that the third uplink information does not include the first uplink information, the terminal device determines not to provide the earlier indication that the terminal device is the RedCap terminal in the first uplink information.

For example, the candidates of the third uplink information are the first PRACH and the first PUSCH. The first indication information directly indicates that the third uplink information is the first PRACH and/or the first PUSCH. In the case that the third uplink information includes the first PRACH, the terminal device determines to provide the earlier indication that the terminal device is the RedCap terminal in the first PRACH. In the case that the third uplink information includes the first PUSCH, the terminal device determines to provide the earlier indication that the terminal device is the RedCap terminal in the first PUSCH. In a case that the third uplink information includes the first PRACH and the first PUSCH, the terminal device determines to jointly provide the earlier indication that the terminal device is the RedCap terminal in the first PRACH and the first PUSCH.

Example 3: The first indication information indicates whether to provide the earlier indication that the terminal device is the RedCap terminal during the random access procedure, and configure uplink information for providing the earlier indication that the terminal device is the RedCap terminal.

For example, on the basis that the first indication information explicitly indicates whether to provide the earlier indication that the terminal device is the RedCap terminal during the random access procedure in the Example 1, the first indication information can further explicitly configure the uplink information for providing the earlier indication in conjunction with the Example 2.

As another example, on the basis that the first indication information implicitly indicates whether to provide the earlier indication that the terminal device is the RedCap terminal during the random access procedure by configuring the first uplink resource in the Example 1, the first indication information can further explicitly configure the uplink information for providing the earlier indication in conjunction with the Example 2.

For another example, on the basis that the first indication information implicitly indicates whether to provide the earlier indication that the terminal device is the RedCap terminal during the random access procedure by configuring the first uplink resource in the Example 1, the first indication information can further implicitly configure the uplink information for providing the earlier indication. Exemplarily, in the example that the first indication information is used to configure the first uplink resource, the first uplink resource is used to transmit the first uplink information.

Specifically, the network device configures resources for transmitting the first PRACH for the RedCap terminal through the first indication information, including resources for transmitting the first PRACH used by the non-RedCap terminal, and optionally, resources for transmitting the first PRACH used by the RedCap terminal. When the network configures the resources for transmitting the first PRACH used by the RedCap terminal, it is implicitly configured that the terminal device provides the earlier indication that the terminal device is the RedCap terminal through the first PRACH. When the network does not configure the resources for transmitting the first PRACH used by the RedCap terminal, it is implicitly configured that the terminal device does not provide the earlier indication about a type or a capability of the RedCap terminal through the first PRACH. Therefore, the RedCap terminal can determine whether to provide the earlier indication about a type or a capability of the RedCap terminal through the first PRACH according to whether the network configures the resources for transmitting the first PRACH used by the RedCap terminal.

Similarly, the network device configures resources for transmitting the first PUSCH for the RedCap terminal through the first indication information, including resources for transmitting the first PUSCH used by the non-RedCap terminal, and optionally, resources for transmitting the first PUSCH used by the RedCap terminal. When the network configures the resources for transmitting the first PUSCH used by the RedCap terminal, it is implicitly configured that the terminal device provides the earlier indication that the terminal device is the RedCap terminal through the first PUSCH. When the network does not configure the resources for transmitting the first PUSCH used by the RedCap terminal, it is implicitly configured that the terminal device does not provide the earlier indication about a type or a capability of the RedCap terminal through the first PUSCH. Therefore, the RedCap terminal can determine whether to provide the earlier indication about a type or a capability of the RedCap terminal through the first PUSCH according to whether the network configures the resources for transmitting the first PUSCH used by the RedCap terminal.

Optionally, in the above example, the method for information indication may further include the following operation.

In the case that the first uplink resource does not include a uplink resource for the RedCap terminal, the terminal device determines to provide the earlier indication that the terminal device is the RedCap terminal in second uplink information of the random access procedure.

That is to say, in the case that the first uplink resource does not include the uplink resource for the RedCap terminal, the first indication information further indicates that the terminal device determines to provide the earlier indication that the terminal device is the RedCap terminal in the second uplink information of the random access procedure.

Exemplarily, the second uplink information includes the first PUSCH in a case that the first uplink information includes the first PRACH.

Exemplarily, the second uplink information includes the first PRACH in a case that the first uplink information includes the first PUSCH.

For example, the network device configures resources for transmitting the first PRACH for the RedCap terminal through the first indication information, including resources for transmitting the first PRACH used by the non-RedCap terminal, and optionally, resources for transmitting the first PRACH used by the RedCap terminal. When the network configures the resources for transmitting the first PRACH used by the RedCap terminal, it is implicitly configured that the terminal device provides the earlier indication that the terminal device is the RedCap terminal through the first PRACH. When the network does not configure the resources for transmitting the first PRACH used by the RedCap terminal, it is implicitly configured that the terminal device provide the earlier indication about a type or a capability of the RedCap terminal through the first PUSCH.

For another example, the network device configures resources for transmitting the first PUSCH for the RedCap terminal through the first indication information, including resources for transmitting the first PUSCH used by the non-RedCap terminal, and optionally, resources for transmitting the first PUSCH used by the RedCap terminal. When the network configures the resources for transmitting the first PUSCH used by the RedCap terminal, it is implicitly configured that the terminal device provides the earlier indication that the terminal device is the RedCap terminal through the first PUSCH. When the network does not configure the resources for transmitting the first PUSCH used by the RedCap terminal, it is implicitly configured that the terminal device provide the earlier indication about a type or a capability of the RedCap terminal through the first PRACH.

Optionally, in the embodiments of the present disclosure, the earlier indication that the terminal device is the RedCap terminal includes: an indication about at least one of a type or a capability of the RedCap terminal based on predetermined information, i.e., the device type of the terminal device is a RedCap terminal and/or the capability of the terminal device is indicated based on the predetermined information.

Optionally, the predetermined information includes at least one of the following:
a PRACH timing;
a PRACH format;
a Preamble;
a BWP for transmitting the PRACH;
a scrambling code of data carried by PUSCH;
a sequence of a DMRS of the PUSCH;
information carried by the PUSCH;
a PUSCH resource configuration; and
a DMRS configuration for the PUSCH.

Exemplarily, the operation of providing the earlier indication that the terminal device is a RedCap terminal in the first PRACH includes: the type and/or capability of the RedCap terminal is carried by at least one of the specific PRACH occasion, the PRACH format, or the preamble; and the operation may further include: the type and/or capability of the RedCap terminal is carried by the BandWidth Part (BWP) for transmitting the PRACH.

Exemplarily, the operation of providing the earlier indication that the terminal device is a RedCap terminal in the first PUSCH includes at least one of the following:
carrying the type and/or capability of the RedCap terminal by the scrambling code of data carried by PUSCH;
carrying the type and/or capability of the RedCap terminal by the sequence of the PUSCH DMRS;
carrying the type and/or capability of the RedCap terminal by the information carried by the PUSCH;
carrying the type and/or capability of the RedCap terminal through different PUSCH resource configurations; and
carrying the type and/or capability of the RedCap terminal through different PUSCH DMRS configurations.

Specific arrangements and implementations of the embodiments of the present disclosure have been described above from different angles through a plurality of embodiments. With the above at least one embodiment, a terminal device can determine whether to provide an earlier indication that the terminal device is a RedCap terminal in first uplink information of a random access procedure according to the first indication information transmitted by a network device. Therefore, by configuring the first indication information, the earlier indication and the uplink information used for the earlier indication can be flexibly configured, so that it is convenient for the network device to perform optimization according to the terminal type, furthermore, it can avoid a decrease of the utilization rate caused by an excessive division to uplink resources during the random access procedure.

Corresponding to the processing method of at least one embodiment described above, referring to FIG. 7, an embodiment of the present disclosure also provides a terminal device 100 including a first communication module 110 and a first processing module 120.

The first communication module 110 is configured to receive first indication information from a network device.

The first processing module 120 is configured to determine whether to provide an earlier indication that the terminal device is a RedCap terminal in first uplink information of a random access procedure according to the first indication information.

Optionally, the first uplink information includes at least one of a first PRACH or a first PUSCH.

Optionally, the first PRACH includes:
a PRACH of a 4-step random access procedure;
   or
a PRACH in an MsgA of a 2-step random access procedure.

Optionally, the first PUSCH includes:
a PUSCH in an Msg3 of a 4-step random access procedure;
   or
a PUSCH of an MsgA of a 2-step random access procedure.

Optionally, the first processing module 110 is configured to:
in a case that the earlier indication that the terminal device is the RedCap terminal is determined to provide in the random access procedure according to received second indication information, determine whether to provide the earlier indication that the terminal device is the RedCap terminal in the first uplink information of the random access procedure according to the first indication information.

The first indication information is used to configure a first uplink resource for the terminal device 100, and the first uplink resource is used to transmit uplink information during the random access procedure;
the first processing module 110 is configured to:
determine to provide the earlier indication that the terminal device is the RedCap terminal in the first uplink information of the random access procedure in a case that the first uplink resource includes an uplink resource for the RedCap terminal.

Optionally, the first uplink resource is used to transmit the first uplink information.

Optionally, the first processing module 110 is further configured to:
determine to provide the earlier indication that the terminal device is the RedCap terminal in second uplink information of the random access procedure in a case that the first uplink resource does not include the uplink resource for the RedCap terminal.

Optionally, the second uplink information includes a first PUSCH in a case that the first uplink information includes a first PRACH.

Optionally, the second uplink information includes a first PRACH in a case that the first uplink information includes a first PUSCH.

Optionally, the first indication information indicates third uplink information, and the third uplink information is used to provide the earlier indication that the terminal device is the RedCap terminal.
the first processing module 110 is configured to:
determine to provide the earlier indication that the terminal device is the RedCap terminal in the first uplink information in a case that the third uplink information includes the first uplink information.

Optionally, the earlier indication that the terminal device is the RedCap terminal includes: an indication about at least one of a type or a capability of the RedCap terminal based on predetermined information.

Optionally, the predetermined information includes at least one of the following:
a PRACH occasion;
a PRACH format;
a preamble;
a BWP for transmitting the PRACH;
a scrambling code of data carried by the PUSCH;
a sequence of a DMRS of the PUSCH;
information carried by the PUSCH;
a PUSCH resource configuration; and
a DMRS configuration for the PUSCH.

The terminal device 100 of the embodiments of the present disclosure can realize the corresponding function of the terminal device in the aforementioned method embodiments. The corresponding flows, functions, implementation manners and beneficial effects of all modules (sub-modules, units or components, etc.) in the terminal device 100 can be referred to the corresponding description in the aforementioned method embodiments, and will not be described here. It should be noted that the functions described with respect to each module (sub-module, unit, component, etc.) in the terminal device 100 according to the embodiments of the present disclosure may be realized by different modules (sub-modules, units, components, etc.) or by a same module (sub-module, unit, component, etc.). In addition, the communication module in the embodiments of the present disclosure can be realized by a transceiver of the device, and some or all of the remaining modules can be realized by a processor of the device.

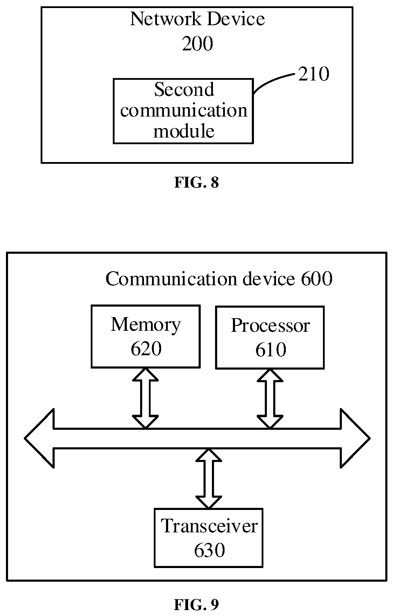

FIG. 8 is a schematic block diagram of a network device 200 according to an embodiment of the present disclosure. The network device 200 may include a second communication module 210.

The second communication module 210 is configured to transmit first indication information to a terminal device.

The first indication information indicates that the terminal device determines whether to provide an earlier indication that the terminal device is a RedCap terminal in first uplink information of a random access procedure.

Optionally, the second communication module 210 is configured to:
transmit the first indication information to the terminal device in a case that second indication information is transmitted to the terminal device.

The second indication information indicates that the terminal device determines to provide the earlier indication that the terminal device is the RedCap terminal during the random access procedure.

The first indication information is used to configure a first uplink resource for the terminal device, and the first uplink resource is used to transmit uplink information during the random access procedure;
in a case that the first uplink resource includes an uplink resource for the RedCap terminal, the first indication information further indicates that the terminal device determines to provide the earlier indication that the terminal device is the RedCap terminal in the first uplink information.

Optionally, the first uplink resource is used to transmit the first uplink information.

Optionally, in a case that the first uplink resource does not include the uplink resource for the RedCap terminal, the first indication information further indicates that the terminal device determines to provide the earlier indication that the terminal device is the RedCap terminal in second uplink information of the random access procedure.

Optionally, the first indication information indicates third uplink information, and the third uplink information is used to provide the earlier indication that the terminal device is the RedCap terminal.

The network device 200 of the embodiments of the present disclosure can realize the corresponding function of the network device in the aforementioned method embodiments. The corresponding flows, functions, implementation manners and beneficial effects of all modules (sub-modules, units or components, etc.) in the network device 200 can be referred to the corresponding description in the aforementioned method embodiments, and will not be described here. It should be noted that the functions described with respect to each module (sub-module, unit, component, etc.) in the network device 200 according to the embodiments of the present disclosure may be realized by different modules (sub-modules, units, components, etc.) or by a same module (sub-module, unit, component, etc.). In addition, the communication module in the embodiments of the present disclosure can be realized by a transceiver of the device, and some or all of the remaining modules can be realized by a processor of the device.

FIG. 9 is a schematic structural diagram of a communication device 600 according to an embodiment of the present disclosure, the communication device 600 includes a processor 610 that can call and execute computer programs in a memory to implement the method in the embodiments of the present disclosure.

Optionally, the communication device 600 may further include a memory 620. The processor 610 may call and execute computer programs from the memory 620 to implement the method in the embodiments of the present disclosure.

The memory 620 may be a separate device independent of the processor 610 or may be integrated in the processor 610.

Optionally, the communication device 600 may further include a transceiver 630. The processor 610 may control the transceiver 630 to communicate with other devices. Specifically, the transceiver 630 may transmit information or data to other devices or receive information or data transmitted by other devices.

The transceiver 630 may include a transmitter and a receiver. The transceiver 630 may further include antennas, and the number of the antennas may be one or more.

Optionally, the communication device 600 can be a network device according to the embodiments of the present disclosure, and the communication device 600 can realize corresponding processes realized by the network device in the various methods according to the embodiments of the present disclosure. For the sake of brevity, it will not be elaborated herein.

Optionally, the communication device 600 can be a terminal device of the embodiments of the present disclosure, and the communication device 600 can realize corresponding processes realized by the terminal device in various methods according to the embodiments of the present disclosure. For the sake of brevity, it will not be elaborated herein.

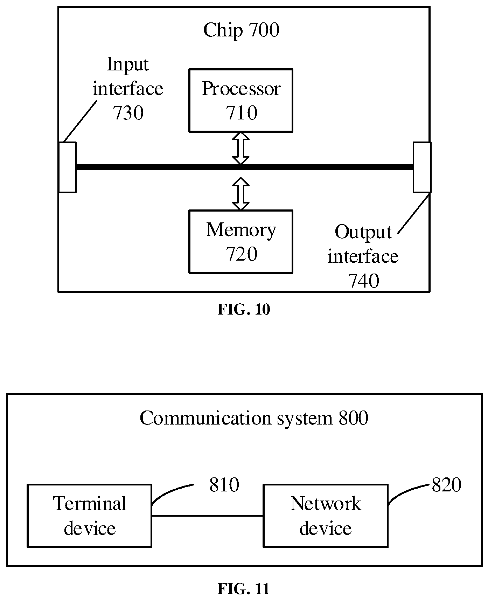

FIG. 10 is a schematic structural diagram of a chip 700 according to an embodiment of the present disclosure. The chip 700 includes a processor 710. The processor 710 can call and execute computer programs in a memory to implement the method in the embodiments of the present disclosure.

Optionally, the chip 700 may further include a memory 720. The processor 710 can call and execute computer programs from the memory 720 to implement the method in the embodiments of the present disclosure.

The memory 720 may be a separate device independent of the processor 710 or may be integrated into the processor 710.

Optionally, the chip 700 may further include an input interface 730. The processor 710 can control the input interface 730 to communicate with other devices or chips, and in particular to obtain information or data transmitted by other devices or chips.

Optionally, the chip 700 may further include an output interface 740. The processor 710 may control the output interface 740 to communicate with other devices or chips, and in particular to output information or data to other devices or chips.

Optionally, the chip can be applied to the network device in the embodiments of the present disclosure, and the chip can implement the corresponding processes realized by the network device in various methods according to the embodiments of the present disclosure. For the sake of brevity, it will not be elaborated herein.

Optionally, the chip can be applied to the terminal device in the embodiments of the present disclosure, and the chip can implement the corresponding processes realized by the terminal device in various methods according to the embodiments of the present disclosure. For the sake of brevity, it will not be elaborated herein.

It is to be understood that the chip mentioned in the embodiments of the present disclosure can also be referred to as a system level chip, a system chip, a chip system or an on-chip system chip, etc.

The processor mentioned above may be a general purpose processor, a digital signal processor (DSP), a field programmable gate array (FPGA), an application specific integrated circuit (ASIC), or other programmable logic devices, transistor logic devices, discrete hardware components, and the like. The general purpose processor mentioned above may be a microprocessor or any conventional processor or the like.

The memory mentioned above may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM).

It is to be understood that the memory described above is exemplary, but not limiting description, for example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), etc. That is, the memory in the embodiments of the present disclosure is intended to include, but is not limited to, memories of these and any other suitable type.

FIG. 11 is a schematic block diagram of a communication system 800 including a terminal device 810 and a network device 820 according to an embodiment of the present disclosure.

The network device 820 transmits first indication information to the terminal device 810;

The terminal device 810 receives the first indication information from the network device 820;

The terminal device 810 determines whether to provide an earlier indication that the terminal device is a RedCap terminal in first uplink information of a random access procedure according to the first indication information.

The terminal device 810 may be used to implement corresponding functions implemented by the terminal device in the methods of various embodiments of the present disclosure, and the network device 820 may be used to implement corresponding functions implemented by the network device in the methods of various embodiments of the present disclosure. For the sake of brevity, it will not be elaborated herein.

In the above embodiments, it may be implemented in whole or in part by software, hardware, firmware or any combination thereof. When implemented by software, it can be implemented in whole or in part in the form of a computer program product. The computer program product includes one or more computer instructions. When the computer program instructions are loaded and executed on a computer, the processes or functions described in accordance with embodiments of the present disclosure is generated in whole or in part. The computer may be a general purpose computer, a specific computer, a computer network, or other programmable devices. The computer instructions may be stored in a computer-readable storage medium or transmitted from one computer-readable storage medium to another computer-readable storage medium, for example, the computer instructions may be transmitted from one Web site, computer, server, or data center via wired (e.g. coaxial cable, optical fiber, Digital Subscriber Line (DSL)) or wireless (e.g. infrared, wireless, microwave, etc.) to another Web site, computer, server, or data center. The computer-readable storage medium may be any usable medium accessible to a computer or a data storage device, such as a server containing one or more usable media integration, data center, etc. The available media may be a magnetic media (e.g. floppy disk, hard disk, magnetic tape), an optical media (e.g. DVD), or a semiconductor media (e.g. Solid State Disk (SSD)), etc.

It should be understood that in various embodiments of the present disclosure, the size of the sequence number of the above-mentioned processes does not mean an execution order, and the execution order of each process should be determined by its function and inherent logic, and should not be limited in any way to the implementation process of the embodiments of the present disclosure.

The skilled in the art will clearly appreciate that, for convenience and conciseness of description, the specific operating processes of the above-described systems, devices and units may refer to the corresponding processes in the aforementioned embodiments corresponding to the methods and will not be elaborated herein.

The above is only the specific embodiments of the present disclosure, but the scope of protection of the present disclosure is not limited to this. Any modifications and variations that can be easily known by the person skilled in the technical field within the scope of protection of the present disclosure shall be included in the scope of protection of the present disclosure. Therefore, the scope of protection of the present disclosure shall be subject to the scope of protection of the claims.

## Claims

1. A method for information indication, comprising:
receiving (S510), by a Reduced Capability, RedCap, terminal, first indication information from a network device; and
determining (S520), by the RedCap terminal according to the first indication information, whether to provide an earlier indication for the RedCap terminal in first uplink information of a random access procedure; wherein the first uplink information comprises at least one of a first Physical Random Access CHannel, PRACH, or a first Physical Uplink Shared CHannel, PUSCH;
wherein the first indication information is used to configure resources for transmitting a PRACH for the RedCap terminal, and the resources comprise a resource used by a non-RedCap terminal and a resource used by the RedCap terminal;
the determining (S520), by the RedCap terminal according to the first indication information, whether to provide the earlier indication for the RedCap terminal in the first uplink information of the random access procedure comprises:
determining, by the RedCap terminal, to provide the earlier indication for the RedCap terminal in the first uplink information of the random access procedure;
wherein the first PRACH comprises:
a PRACH of a 4-step random access procedure; or
a PRACH in a Message A, MsgA, of a 2-step random access procedure;
and
the first PUSCH comprises:
a PUSCH in a Message 3, Msg3, of a 4-step random access procedure; or
a PUSCH of an MsgA of a 2-step random access procedure.

2. The method of claim 1, wherein the determining (S520), by the RedCap terminal according to the first indication information, whether to provide the earlier indication for the RedCap terminal in the first uplink information of the random access procedure further comprises:
in a case that the earlier indication for the RedCap terminal is determined to provide in the random access procedure according to received second indication information, determining, by the RedCap terminal according to the first indication information, whether to provide the earlier indication for the RedCap terminal in the first uplink information of the random access procedure.

3. The method of claim 1, wherein the resources configured by the first indication information is used to transmit the first uplink information.

4. The method of claim 1 or 2, wherein the first indication information indicates third uplink information, and the third uplink information is used to provide the earlier indication for the RedCap terminal,
wherein the determining (S520), by the RedCap terminal according to the first indication information, whether to provide the earlier indication for the RedCap terminal in the first uplink information of the random access procedure further comprises:
determining, by the RedCap terminal, to provide the earlier indication for the RedCap terminal in the first uplink information in a case that the third uplink information comprises the first uplink information.

5. The method of any one of claims 1-4, wherein the earlier indication for the RedCap terminal comprises: an indication about at least one of a type or a capability of the RedCap terminal based on predetermined information; and
the predetermined information comprises at least one of the following:
a PRACH occasion;
a PRACH format;
a preamble;
a BandWidth Part, BWP, for transmitting the PRACH;
a scrambling code of data carried by the PUSCH;
a sequence of a DeModulation Reference Signal, DMRS, of the PUSCH;
information carried by the PUSCH;
a PUSCH resource configuration; and
a DMRS configuration for the PUSCH.

6. The method of claim 1, wherein the first indication information comprises a target bit, the target bit with a value of 1 is used to indicate the RedCap terminal to provide the earlier indication, and the target bit with a value of 0 is used to indicate the RedCap terminal not to provide the earlier indication.

7. The method of claim 1, further comprising:
in a case where the resources configured by the first indication information comprise a PRACH resource for the non-RedCap terminal, providing, by the RedCap terminal, the earlier indication for the RedCap terminal in the first PRACH of the random access procedure; and
in a case where the resources configured by the first indication information do not comprise the PRACH resource for the non-RedCap terminal, not providing, by the RedCap terminal, the earlier indication for the RedCap terminal in the first PRACH of the random access procedure, and providing, by the RedCap terminal, the earlier indication for the RedCap terminal in the first PUSCH of the random access procedure.

8. A method for information indication, comprising
transmitting (S610), by a network device, first indication information to a Reduced Capability, RedCap, terminal,
wherein the first indication information indicates that the RedCap terminal should determine whether to provide an earlier indication for the RedCap terminal in first uplink information of a random access procedure, wherein the first uplink information comprises at least one of a first Physical Random Access CHannel, PRACH, or a first Physical Uplink Shared CHannel, PUSCH;
wherein the first indication information is used to configure resources for transmitting a PRACH for the RedCap terminal, and the resources comprise a resource used by a non-RedCap terminal and a resource used by the RedCap terminal;
the first indication information further indicates that the RedCap terminal determines to provide the earlier indication for the RedCap terminal in the first uplink information;
wherein the first PRACH comprises:
a PRACH of a 4-step random access procedure; or
a PRACH in a Message A, MsgA, of a 2-step random access procedure;
and
the first PUSCH comprises:
a PUSCH in a Message 3, Msg3, of a 4-step random access procedure; or
a PUSCH of an MsgA of a 2-step random access procedure.

9. The method of claim 8, wherein the transmitting (S610), by the network device, the first indication information to the RedCap terminal comprises:
transmitting, by the network device, the first indication information to the RedCap terminal in a case that second indication information is transmitted to the RedCap terminal,
wherein the second indication information indicates that the RedCap terminal determines to provide the earlier indication for the RedCap terminal during the random access procedure.

10. The method of claim 8 or 9, wherein the first indication information further indicates third uplink information, and the third uplink information is used to provide the earlier indication for the RedCap terminal.

11. The method of claim 8, wherein the first indication information comprises a target bit, the target bit with a value of 1 is used to indicate the RedCap terminal to provide the earlier indication, and the target bit with a value of 0 is used to indicate the RedCap terminal not to provide the earlier indication.

12. A terminal device (600), comprising: a processor (610) and a memory (620) for storing a computer program, the processor (610) being configured to call and execute the computer program stored in the memory (620) to perform the method of any one of claims 1 to 7.

13. A network device (600), comprising: a processor (610) and a memory (620) for storing a computer program, the processor (610) being configured to call and execute the computer program stored in the memory (620) to perform the method of any one of claims 8 to 11.

## Patentansprüche

1. Verfahren zur Informationsanzeige, das Folgendes umfasst:
Empfangen (S510) durch ein Endgerät verringerter Leistungsfähigkeit, RedCap-Endgerät, erster Anzeigeinformationen von einer Netzvorrichtung und
Bestimmen (S520) durch das RedCap-Endgerät gemäß den ersten Anzeigeinformationen, ob eine frühere Anzeige für das RedCap-Endgerät in ersten Aufwärtsstreckeninformationen einer Prozedur für wahlfreien Zugriff bereitgestellt werden soll; wobei die ersten Aufwärtsstreckeninformationen mindestens einen eines ersten physischen Kanals für wahlfreien Zugriff, PRACH, oder eines ersten physischen gemeinsam verwendeten Aufwärtsstreckenkanals, PUSCH, umfassen;
wobei die ersten Anzeigeinformationen verwendet werden, um Betriebsmittel zum Senden eines PRACH für das RedCap-Endgerät zu konfigurieren, und die Betriebsmittel ein Betriebsmittel, das durch ein Nicht-RedCap-Endgerät verwendet wird, und ein Betriebsmittel, das durch das RedCap-Endgerät verwendet wird, umfassen, und
das Bestimmen (S520) durch das RedCap-Endgerät gemäß den ersten Anzeigeinformationen, ob die frühere Anzeige für das RedCap-Endgerät in den ersten Aufwärtsstreckeninformationen der Prozedur für wahlfreien Zugriff bereitgestellt werden soll, Folgendes umfasst:
Bestimmen durch das RedCap-Endgerät, die frühere Anzeige für das RedCap-Endgerät in den ersten Aufwärtsstreckeninformationen der Prozedur für wahlfreien Zugriff bereitzustellen;
wobei der erste PRACH Folgendes umfasst:
einen PRACH einer vierstufigen Prozedur für wahlfreien Zugriff oder
einen PRACH in einer Nachricht A, MsgA, einer zweistufigen Prozedur für wahlfreien Zugriff;
und
der erste PUSCH Folgendes umfasst:
einen PUSCH in einer Nachricht 3, Msg3, einer vierstufigen Prozedur für wahlfreien Zugriff oder
einen PUSCH einer MsgA einer zweistufigen Prozedur für wahlfreien Zugriff.

2. Verfahren nach Anspruch 1, wobei das Bestimmen (S520) durch das RedCap-Endgerät gemäß den ersten Anzeigeinformationen, ob die frühere Anzeige für das RedCap-Endgerät in den ersten Aufwärtsstreckeninformationen der Prozedur für wahlfreien Zugriff bereitgestellt werden soll, ferner Folgendes umfasst:
falls gemäß empfangenen zweiten Anzeigeinformationen bestimmt wird, dass die frühere Anzeige für das RedCap-Endgerät in der Prozedur für wahlfreien Zugriff bereitgestellt werden soll, Bestimmen durch das RedCap-Endgerät gemäß den ersten Anzeigeinformationen, ob die frühere Anzeige für das RedCap-Endgerät in den ersten Aufwärtsstreckeninformationen der Prozedur für wahlfreien Zugriff bereitgestellt werden soll.

3. Verfahren nach Anspruch 1, wobei die Betriebsmittel, die durch die ersten Anzeigeinformationen konfiguriert sind, verwendet werden, um die ersten Aufwärtsstreckeninformationen zu senden.

4. Verfahren nach Anspruch 1 oder 2, wobei die ersten Anzeigeinformationen dritte Aufwärtsstreckeninformationen anzeigen und die dritten Aufwärtsstreckeninformationen verwendet werden, um die frühere Anzeige für das RedCap-Endgerät bereitzustellen, wobei das Bestimmen (S520) durch das RedCap-Endgerät gemäß den ersten Anzeigeinformationen, ob die frühere Anzeige für das RedCap-Endgerät in den ersten Aufwärtsstreckeninformationen der Prozedur für wahlfreien Zugriff bereitgestellt werden soll, ferner Folgendes umfasst:
Bestimmen durch das RedCap-Endgerät, die frühere Anzeige für das RedCap-Endgerät in den ersten Aufwärtsstreckeninformationen bereitzustellen, falls die dritten Aufwärtsstreckeninformationen die ersten Aufwärtsstreckeninformationen umfassen.

5. Verfahren nach einem der Ansprüche 1-4, wobei die frühere Anzeige für das RedCap-Endgerät Folgendes umfasst:
eine Anzeige über mindestens eines eines Typs oder einer Leistungsfähigkeit des RedCap-Endgeräts auf der Grundlage vorgegebener Informationen; und
die vorgegebenen Informationen mindestens eines der Folgenden umfassen:
ein PRACH-Ereignis;
ein PRACH-Format;
eine Präambel;
einen Bandbreitenabschnitt, BWP, zum Senden des PRACH;
einen Verschlüsselungscode von Daten, die durch den PUSCH geführt werden;
eine Sequenz eines Demodulationsbezugssignals, DMRS, des PUSCH;
Informationen, die durch den PUSCH geführt werden;
eine PUSCH-Betriebsmittelkonfiguration und
eine DMRS-Konfiguration für den PUSCH.

6. Verfahren nach Anspruch 1, wobei die ersten Anzeigeinformationen ein Zielbit umfassen, das Zielbit mit einem Wert von 1 verwendet wird, um anzugeben, dass das RedCap-Endgerät die frühere Anzeige bereitstellen soll, und das Zielbit mit einem Wert von 0 verwendet wird, um anzugeben, dass das RedCap-Endgerät die frühere Anzeige nicht bereitstellen soll.

7. Verfahren nach Anspruch 1, das ferner Folgendes umfasst:
falls die Betriebsmittel, die durch die ersten Anzeigeinformationen konfiguriert sind, ein PRACH-Betriebsmittel für das Nicht-RedCap-Endgerät umfassen, Bereitstellen durch das RedCap-Endgerät der früheren Anzeige für das RedCap-Endgerät im ersten PRACH der Prozedur für wahlfreien Zugriff, und
falls die Betriebsmittel, die durch die ersten Anzeigeinformationen konfiguriert sind, das PRACH-Betriebsmittel für das Nicht-RedCap-Endgerät nicht umfassen, nicht Bereitstellen durch das RedCap-Endgerät der früheren Anzeige für das RedCap-Endgerät im ersten PRACH der Prozedur für wahlfreien Zugriff und Bereitstellen durch das RedCap-Endgerät der früheren Anzeige für das RedCap-Endgerät im ersten PUSCH der Prozedur für wahlfreien Zugriff.

8. Verfahren zur Informationsanzeige, das Folgendes umfasst:
Senden (S610) durch eine Netzvorrichtung erster Anzeigeinformationen zu einem Endgerät verringerter Leistungsfähigkeit, RedCap-Endgerät,
wobei die ersten Anzeigeinformationen anzeigen, dass das RedCap-Endgerät bestimmen soll, ob eine frühere Anzeige für das RedCap-Endgerät in ersten Aufwärtsstreckeninformationen einer Prozedur für wahlfreien Zugriff bereitgestellt werden soll, wobei die ersten Aufwärtsstreckeninformationen mindestens einen eines ersten physischen Kanals für wahlfreien Zugriff, PRACH, oder eines ersten physischen gemeinsam verwendeten Aufwärtsstreckenkanals, PUSCH, umfassen;
die ersten Anzeigeinformationen verwendet werden, um Betriebsmittel zum Senden eines PRACH für das RedCap-Endgerät zu konfigurieren, und die Betriebsmittel ein Betriebsmittel, das durch ein Nicht-RedCap-Endgerät verwendet wird, und ein Betriebsmittel, das durch das RedCap-Endgerät verwendet wird, umfassen,
die ersten Anzeigeinformationen ferner anzeigen, dass das RedCap-Endgerät bestimmt, die frühere Anzeige für das RedCap-Endgerät in den ersten Aufwärtsstreckeninformationen bereitzustellen; und
der erste PRACH Folgendes umfasst:
einen PRACH einer vierstufigen Prozedur für wahlfreien Zugriff oder
einen PRACH in einer Nachricht A, MsgA, einer zweistufigen Prozedur für wahlfreien Zugriff;
und
der erste PUSCH Folgendes umfasst:
einen PUSCH in einer Nachricht 3, Msg3, einer vierstufigen Prozedur für wahlfreien Zugriff oder
einen PUSCH einer MsgA einer zweistufigen Prozedur für wahlfreien Zugriff.

9. Verfahren nach Anspruch 8, wobei das Senden (S610) durch die Netzvorrichtung der ersten Anzeigeinformationen zum RedCap-Endgerät Folgendes umfasst:
Senden durch die Netzvorrichtung der ersten Anzeigeinformationen zum RedCap-Endgerät, falls die zweiten Anzeigeinformationen zum RedCap-Endgerät gesendet werden, wobei
die zweiten Anzeigeinformationen anzeigen, dass das RedCap-Endgerät bestimmt, die frühere Anzeige für das RedCap-Endgerät während der Prozedur für wahlfreien Zugriff bereitzustellen.

10. Verfahren nach Anspruch 8 oder 9, wobei die ersten Anzeigeinformationen ferner dritte Aufwärtsstreckeninformationen anzeigen und die dritten Aufwärtsstreckeninformationen verwendet werden, um die frühere Anzeige für das RedCap-Endgerät bereitzustellen.

11. Verfahren nach Anspruch 8, wobei die ersten Anzeigeinformationen ein Zielbit umfassen, das Zielbit mit einem Wert von 1 verwendet wird, um anzugeben, dass das RedCap-Endgerät die frühere Anzeige bereitstellen soll, und das Zielbit mit einem Wert von 0 verwendet wird, um anzugeben, dass das RedCap-Endgerät die frühere Anzeige nicht bereitstellen soll.

12. Endgerät (600), das Folgendes umfasst: einen Prozessor (610) und einen Speicher (620) zum Speichern eines Computerprogramms, wobei der Prozessor (610) konfiguriert ist, das Computerprogramm, das im Speicher (620) gespeichert ist, aufzurufen und auszuführen, um das Verfahren nach einem der Ansprüche 1 bis 7 durchzuführen.

13. Netzvorrichtung (600), die Folgendes umfasst: einen Prozessor (610) und einen Speicher (620) zum Speichern eines Computerprogramms, wobei der Prozessor (610) konfiguriert ist, das Computerprogramm, das im Speicher (620) gespeichert ist, aufzurufen und auszuführen, um das Verfahren nach einem der Ansprüche 8 bis 11 durchzuführen.

## Revendications

1. Procédé d'indication d'informations, le procédé comprenant les étapes suivantes :
recevoir (S510), par un terminal à capacité réduite, RedCap, des premières informations d'indication en provenance d'un dispositif de réseau ; et
déterminer (S520), par le terminal RedCap, en fonction des premières informations d'indication, s'il convient ou non de fournir une indication anticipée pour le terminal RedCap dans les premières informations de liaison montante d'une procédure d'accès aléatoire ; où les premières informations de liaison montante comprennent au moins l'un parmi un premier canal d'accès aléatoire physique, PRACH, ou un premier canal partagé de liaison montante physique, PUSCH ;
où les premières informations d'indication sont utilisées pour configurer des ressources destinées à la transmission d'un PRACH pour le terminal RedCap, et les ressources comprennent une ressource utilisée par un terminal non RedCap et une ressource utilisée par le terminal RedCap ;
la détermination (S520), par le terminal RedCap, en fonction des premières informations d'indication, de la nécessité de fournir l'indication anticipée pour le terminal RedCap dans les premières informations de liaison montante de la procédure d'accès aléatoire comprend l'étape suivante :
déterminer, par le terminal RedCap, de fournir l'indication anticipée pour le terminal RedCap dans les premières informations de liaison montante de la procédure d'accès aléatoire ;
où le premier PRACH comprend :
un PRACH d'une procédure d'accès aléatoire en 4 étapes ; ou
un PRACH dans un message A, MsgA, d'une procédure d'accès aléatoire en 2 étapes ;
et
le premier PUSCH comprend :
un PUSCH dans un message 3, Msg3, d'une procédure d'accès aléatoire en 4 étapes ; ou
un PUSCH d'un MsgA d'une procédure d'accès aléatoire en 2 étapes.

2. Procédé selon la revendication 1, dans lequel la détermination (S520), par le terminal RedCap, en fonction des premières informations d'indication, de la nécessité de fournir l'indication anticipée pour le terminal RedCap dans les premières informations de liaison montante de la procédure d'accès aléatoire comprend en outre l'étape suivante :
dans le cas où il est déterminé que l'indication anticipée pour le terminal RedCap doit être fournie dans la procédure d'accès aléatoire conformément aux deuxièmes informations d'indication reçues, déterminer, par le terminal RedCap, conformément aux premières informations d'indication, s'il convient ou non de fournir l'indication anticipée pour le terminal RedCap dans les premières informations de liaison montante de la procédure d'accès aléatoire.

3. Procédé selon la revendication 1, dans lequel les ressources configurées par les premières informations d'indication sont utilisées pour transmettre les premières informations de liaison montante.

4. Procédé selon la revendication 1 ou la revendication 2, dans lequel les premières informations d'indication indiquent des troisièmes informations de liaison montante, et les troisièmes informations de liaison montante sont utilisées pour fournir l'indication anticipée pour le terminal RedCap,
dans lequel la détermination (S520), par le terminal RedCap, conformément aux premières informations d'indication, de la nécessité de fournir l'indication anticipée pour le terminal RedCap dans les premières informations de liaison montante de la procédure d'accès aléatoire comprend en outre l'étape suivante :
déterminer, par le terminal RedCap, de fournir l'indication anticipée pour le terminal RedCap dans les premières informations de liaison montante dans le cas où les troisièmes informations de liaison montante comprennent les premières informations de liaison montante.

5. Procédé selon l'une quelconque des revendications 1 à 4, dans lequel l'indication anticipée pour le terminal RedCap comprend : une indication concernant au moins l'un parmi un type ou une capacité du terminal RedCap sur la base d'informations prédéterminées ; et
les informations prédéterminées comprennent au moins l'un des éléments suivants :
une occasion PRACH ;
un format PRACH ;
un préambule ;
une partie de largeur de bande, BWP, pour la transmission du PRACH ;
un code de brouillage des données transportées par le PUSCH ;
une séquence d'un signal de référence de démodulation, DMRS, du PUSCH ;
des informations transportées par le PUSCH ;
une configuration de ressources du PUSCH ; et
une configuration DMRS pour le PUSCH.

6. Procédé selon la revendication 1, dans lequel les premières informations d'indication comprennent un bit cible, le bit cible ayant une valeur de 1 est utilisé pour indiquer au terminal RedCap de fournir l'indication anticipée, et le bit cible ayant une valeur de 0 est utilisé pour indiquer au terminal RedCap de ne pas fournir l'indication anticipée.

7. Procédé selon la revendication 1, comprenant en outre les étapes suivantes :
dans le cas où les ressources configurées par les premières informations d'indication comprennent une ressource PRACH pour le terminal non-RedCap, fournir, par le terminal RedCap, l'indication anticipée pour le terminal RedCap dans le premier PRACH de la procédure d'accès aléatoire ; et
dans le cas où les ressources configurées par les premières informations d'indication ne comprennent pas la ressource PRACH pour le terminal non-RedCap, ne pas fournir, par le terminal RedCap, l'indication anticipée pour le terminal RedCap dans le premier PRACH de la procédure d'accès aléatoire, et fournir, par le terminal RedCap, l'indication anticipée pour le terminal RedCap dans le premier PUSCH de la procédure d'accès aléatoire.

8. Procédé d'indication d'informations, le procédé comprenant les étapes suivantes :
transmettre (S610), par un dispositif de réseau, des premières informations d'indication à un terminal à capacité réduite, RedCap,
où les premières informations d'indication indiquent que le terminal RedCap doit déterminer s'il convient de fournir une indication anticipée pour le terminal RedCap dans les premières informations de liaison montante d'une procédure d'accès aléatoire, où les premières informations de liaison montante comprennent au moins l'un parmi un premier canal d'accès aléatoire physique, PRACH, ou un premier canal partagé de liaison montante physique, PUSCH ;
où les premières informations d'indication sont utilisées pour configurer des ressources destinées à la transmission d'un PRACH pour le terminal RedCap, et les ressources comprennent une ressource utilisée par un terminal non RedCap et une ressource utilisée par le terminal RedCap ;
les premières informations d'indication indiquent en outre que le terminal RedCap détermine de fournir l'indication anticipée pour le terminal RedCap dans les premières informations de liaison montante ;
où le premier PRACH comprend :
un PRACH d'une procédure d'accès aléatoire en 4 étapes ; ou
un PRACH dans un message A, MsgA, d'une procédure d'accès aléatoire en deux étapes ;
et
le premier PUSCH comprend :
un PUSCH dans un message 3, Msg3, d'une procédure d'accès aléatoire en quatre étapes ; ou
un PUSCH d'un MsgA d'une procédure d'accès aléatoire en deux étapes.

9. Procédé selon la revendication 8, dans lequel la transmission (S610), par le dispositif de réseau, des premières informations d'indication au terminal RedCap comprend l'étape suivante :
transmettre, par le dispositif de réseau, les premières informations d'indication au terminal RedCap dans le cas où des deuxièmes informations d'indication sont transmises au terminal RedCap,
où les deuxièmes informations d'indication indiquent que le terminal RedCap détermine de fournir l'indication anticipée pour le terminal RedCap au cours de la procédure d'accès aléatoire.

10. Procédé selon la revendication 8 ou la revendication 9, dans lequel les premières informations d'indication indiquent en outre des troisièmes informations de liaison montante, et les troisièmes informations de liaison montante sont utilisées pour fournir l'indication anticipée au terminal RedCap.

11. Procédé selon la revendication 8, dans lequel les premières informations d'indication comprennent un bit cible, le bit cible ayant une valeur de 1 est utilisé pour indiquer au terminal RedCap de fournir l'indication anticipée, et le bit cible ayant une valeur de 0 est utilisé pour indiquer au terminal RedCap de ne pas fournir l'indication anticipée.

12. Dispositif terminal (600), comprenant : un processeur (610) et une mémoire (620) destinée à stocker un programme informatique, le processeur (610) étant configuré pour appeler et exécuter le programme informatique stocké dans la mémoire (620) afin de mettre en œuvre le procédé selon l'une quelconque des revendications 1 à 7.

13. Dispositif de réseau (600), comprenant : un processeur (610) et une mémoire (620) destinée à stocker un programme informatique, le processeur (610) étant configuré pour appeler et exécuter le programme informatique stocké dans la mémoire (620) afin de mettre en œuvre le procédé selon l'une quelconque des revendications 8 à 11.
